# EUROPEAN PATENT APPLICATION

(11) **EP 0 752 634 A1**
(43) Date of publication of application: **08.01.1997**
(21) Application number: 95304762.8
(22) Date of filing: 07.07.1995
(51) Int. Cl.: G05D 1/00, B64C 13/20, A63H 30/04

(54) **Apparatus for controlling the attitude of a radio-controlled helicopter**

(71) Applicant: SACOM CO., LTD, Tokyo 197 (JP)
(72) Inventor: Akiyama,Mamoru c/o Sacom Co.,Ltd, Akikawa-shi Tokyi 197 (JP); Ogino,Masami c/o Sacom Co.,Ltd, Akikawa-shi Tokyo 197 (JP); Oguchi,Tetsuo c/o Sacom Co.,Ltd, Akikawa-shi Tokyo 197 (JP)
(74) Representative: Skone James, Robert Edmund

(57) **Abstract**

Disclosed is an apparatus for controlling the attitude of a radio-controlled helicopter, which is equipped with elevator, aileron and rudder servomechanisms. It comprises three single-axis gyroscopes (10) each having its axis aligned with the pitch-reference, roll reference and yaw-reference axis to provide signals representing the instantaneous pitch, roll and yaw angular velocities at their output terminals; and control means (CPU) responsive to the pitch-angular, roll-angular and yaw-angular primary control signals from an on-ground transmitter, and to the signals from the gyroscopes for providing pitch-angular, roll-angular and yaw-angular secondary control signals to the elevator, aileron and rudder servomechanisms respectively.

The control means is so designed that: a PID control may be effected on each controlled variable until a predetermined threshold value has been reached, and then a PD control may be effected on each controlled variable until the end of the required control. The predetermined threshsold value at which the PID control is switched to the PD control mode represents a relatively narrow, but uncontrollable variation range in which the attitude of the helicopter depends on uncertainties.

A helicopter equipped with an attitude-controller according to the present invention is guaranteed to be free of an adverse effect caused by uncertainties such as unexpected effects on other controlled variables caused by controlling a selected conrolled variable or the varying condition of wind, accordingly facilitating the radio-controlling of the helicopter from the on-ground transmitter.

## Description

The present invention relates to an apparatus for controlling the attitude of a radio-controlled helicopter for hobby or industrial use.

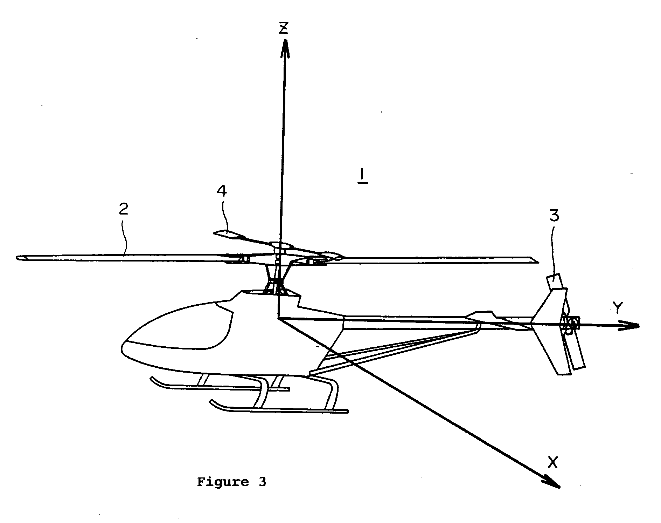

Fig.3 shows a radio-controlled helicopter 1 equipped with a power-driven rotor 2. The single-rotor helicopter can take off and land vertically, move in all directions, or remain stationary in the air under the radio-control provided by an associated on-ground control. The lift can be developed by the relative air velocity produced by the rotation of the rotor, provided that the angle of attack of the rotor blades is adjusted at a certain value. The rottion of the rotor, however, tends to cause the fuselage of the aircraft to rotate in the opposite direction.

To prevent this adverse reaction the single-rotor helicopter is provided at its tail with a small propeller 3 producing a counteracting sideways thrust. To permit the fuselage of the aircraft to automatically remain stationary in the air it is equipped with a tail blade servomechanism, which uses a single-axis gyroscope to determine the instantaneous angular displacement about the z-axis (or yaw-axis) of the orthogonal coordinate system having its origin on the center of gravity of the fuselage of the helicopter. Specifically the servomechanism is responsive to the signal representing such angular displacement from the gyroscope for controlling the pitch angle of the tail blade 3 of the helicopter to prevent the fuselage of the aircraft from rotating in the opposite direction in the air.

The tilt about the x-axis (or pitch-axis) of the orthogonal coordinate system (i.e. pitching) can be controlled by changing the pitch angle of the stabilizer blade 4, and the tilt about the y-axis (or roll-axis) of the orthogonal coordinate system (i.e. rolling) can be controlled by changing the pitch angle of the stabilizer blade 4, too.

The helicopter is equipped with a throttle lever for controlling the rotating speed of the rotor. Also, it has leverages operatively connected to its tail rotor and stabilizer. In controlling the yawing, pitching and rolling of the helicopter, these leverages are proportional-controlled by tilting the control sticks of the on-ground control while watching the flight of the helicopter by sight.

Disadvantageously the control performed on one controlled variable, for instance the pitching control tends to cause unpresumable effects on the attitude of the fuselage of the aircraft. Similar unpresumable effects are liable to be caused by varying vondtion of wind. Unpresumable change in attitude due to such uncertainties, however, can be estimated in terms of extra pitch, roll and yaw angular components, each ranging from 5 to 10 degrees. This unpresumable change in attitude is the cause for making the radio-control of the helicopter difficult.

One object of the present invention is to provide an apparatus for controlling the attitude of a radio-controlled helicopter, which facilitates the radio-control of the helicopter by preventing the attitude of the helicopter in the air from being affected by uncertainties.

To attain this and other objects an apparatus for controlling the attitude of a radio-controlled helicopter according to the present invention (the helicopter being equipped with elevator, aileron and rudder servomechanisms) comprises: first, second and third single-axis gyroscopes each having its axis aligned with one of pitch-reference, roll-reference and yaw-reference axes, which correspond respectively to the x-, y- and z-axes of the orthogonal coordinate system having its origin on the center of gravity of the helicopter, thus permitting the first, second and third single-axis gyroscopes to provide first, second and third signals representing the instantaneous pitch, roll and yaw angular velocities at their output terminals respectively; and control means responsive to the pitch-angular, roll-angular and yaw-angular primary control signals from an on-ground transmitter, and responsive to the first, second and third signals from the first, second and third single-axis gyroscopes for providing pitch-angular, roll-angular and yaw-angular secondary control signals to the elevator, aileron and rudder servomechanisms of the aircraft respectively, the control means being so designed that: a PID control may be effected on each controlled variable until a predetermined threshold value has been reached, and then a PD control may be effected on each controlled variable until the end of the required control, the predetermined threshold value at which the PID control mode is switched to the PD control mode representing a relatively narrow, but uncontrollable variation range in which the attitude of the helicopter depends on uncertainties.

In the PID control mode the secondary control signal may be provided for controlling each controlled variable by: determining the present angle by adding the present angular velocity to the preceding angle, which is determined by integration of instantaneous angular velocities measured on the controlled variable; determining the present angular acceleration by subtracting the preceding angular velocity from the present angular velocity; and totalizing the present angular velocity multiplied by K1, the present angle multiplied by K2 and the present angular acceleration multiplied by K3, where K1, K2 and K3 are given constants, whereas in the PD control mode the secondary control signal may be provided for controlling each controlled variable by: determining the present angular acceleration by subtracting the preceding angular velocity from the present angular velocity; and totalizing the present angular velocity multiplied by K1 and the present angular acceleration multiplied by K3.

The predetermined threshold value is approximately 5 to 10 degrees estimated in terms of pitch-, roll- or yaw-angular displacement about the pitch-reference, roll-reference or yaw-reference axis.

Other objects and advantages of the present invention will be understood from the following description of a preferred embodiment of the present invention, which is shown in accompanying drawings, in which:-
Fig.1 is a block diagram of a yaw control component operatively connected to the rudder servomechanism of the helicopter;
Fig.2 is a flow chart of the PID and PD control mode according to the present invention; and
Fig.3 is a perspective view of a single-rotor helicopter.

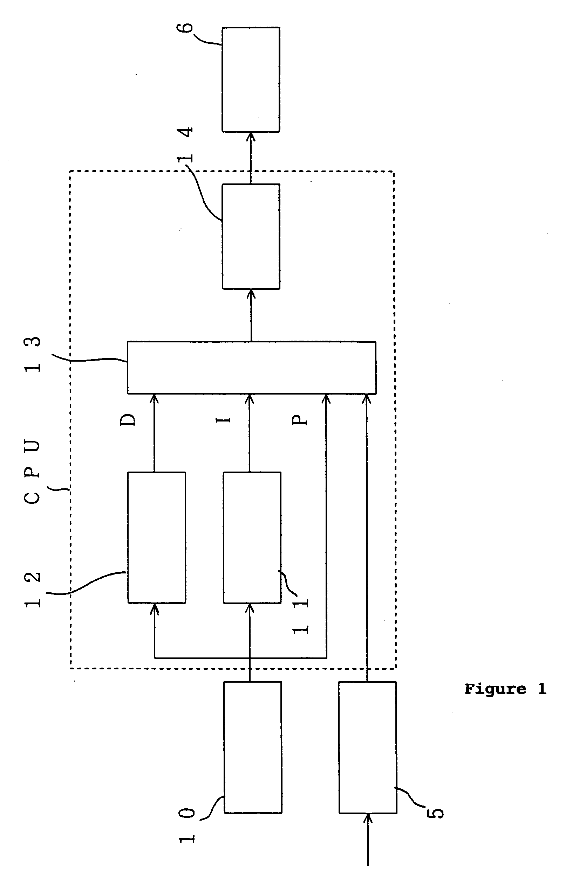

Referring to Fig.1, the present invention is described below in connection with the rudder servomechanism for controlling the yawing of the aircraft. Similar apparatuses are operatively connected to each of the remaining elevator and aileron servomechanisms for controlling the pitching and rolling of the aircraft.

In the drawing an air-borne receiver 5 is able to receive primary control signals from the on-ground transmitter for controlling the yawing of the aircraft. A single-axis gyroscope 10 is fixed so as to have its axis aligned with the yaw-reference axis (or z-axis), thus providing a signal representing the instantaneous yaw angular velocity at its output terminal. A central processing unit CPU includes means 11 connected to the gyroscope 10 for determining the angular displacement or angle of the aircraft about the yaw-reference axis, means 12 connected to the gyroscope 10 for determining the angular acceleration, means 13 connected to the gyroscope 10, the angle determining means 11, the angular acceleration determining means 12 and the receiver 5 for processing these signals to provide a secondary yaw control signal, and means 14 for outputting the secondary signal to the rudder servomechanism 6 in the form of permitting the mechanical part to control the angle of attack of the tail blade.

The central processing unit attains a PID control on the angle of attack of the tail brade until a predetermined threshold value has been reached, and then a PD control on this particular controlled variable until the end of the required control, as described later in detail. The predetermined threshold value at which the PID control mode is switched to the PD control mode represents a relatively narrow, but uncontrollable variation range in which the attitude of the helicopter depends on aeronautical uncertainties, originating from adverse physical effects caused by changing controlled variables other than the angle of attack of the tail blade and/or changing weather such as the condition of wind. This can be safely estimated to be equal to approximately 5 to 10 degrees in terms of yaw-angular displacement.

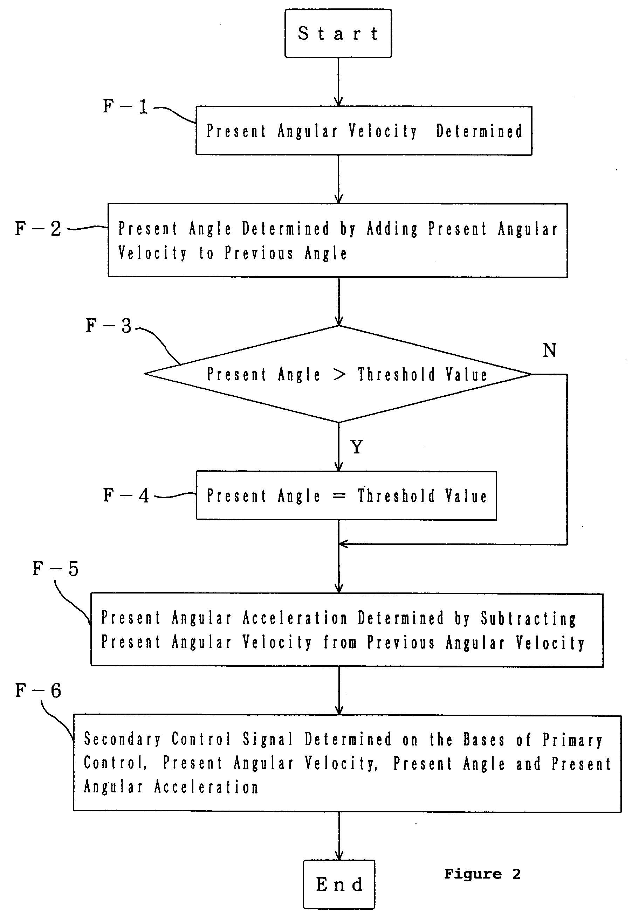

Referring to Fig.2, the PID control mode is effected on the angle of attack of the tail blade by:
receiving the signal from the gyroscope representing the present angular velocity at which the fuselage of the aircraft is rotating about the yaw- (or z-) axis (at "F-1"),
determining the present angle by adding the present angular velocity to the preceding angle or angular displacement, which is determined by integration of instantaneous angular velocities sampled and measured by the gyroscope (at "F-2");
determining the present angular acceleration by subtracting the preceding angular velocity from the present angular velocity (at "F-5"); and
totalizing the present angular velocity multiplied by K1, the present angle multiplied by K2 and the present angular acceleration multiplied by K3, where K1, K2 and K3 are given constants, and determining the secondary control amount from the total of these factors and the primary control amount given by the on-ground transmitter (at "F-6").

The PID control continues until the threshold angle value has been reached.

On the course to the end the present angle reaches the threshold value, and then the PID control is replaced by the PD control, which is effected on the angle of attack of the tail blade by:
receiving the signal from the gyroscope representing the present angular velocity (at "F-1"),
determining the present angular acceleration by subtracting the preceding angular velocity from the present angular velocity (at "F-5"); and
totalizing the present angular velocity multiplied by K1 and the present angular acceleration multiplied by K3, and determining the secondary control amount from the total of these factors and the primary control amount given by the on-ground transmitter (at "F-6").

The primary control amount is a direct function of the angle at which a selected control stick (i.e, the "yaw" or "rudder" stick in this particulr yawing control) of the on-ground transmitter is tilted from the neutral position by thumb. At the end of required control the "rudder" stick is moved back to the neutral position, allowing the PID control on the tail blade 3 to start and continue in the opposite direction until the threshold value of yaw angle has been reduced. This although not desired. causes little or negligible effect on the attitude of the helicpter.

If the PID contrpl mode were continued to the end without being replaced by the PD control mode on the way to the end, the fuselage of the aircraft would begin rotating in the opposite direction in the air when the control stick is made to return to the neutral position, continuing the counter rotation until the fuselage of the aircraft has reached the initial position at which it started rotating in the correct direction.

Thus, no control would be possible unless the integration were made to cease on the way to the end. The point of cease is set at the instant at which the fuselage of the aircraft is supposed to have turned a possible maximum angle due to uncertainties. In the specifcation and claims PID control mode is called "PD control mode" after no integration is effected.

## Claims

1. An apparatus for controlling the attitude of a radio-control led helicopter, which is equipped with elevator, aileron and rudder servomechanisms comprising:
first, second and third single-axis gyroscopes each having its axis aligned with one of pitch-reference, roll-reference and yaw-reference axes, which correspond respectively to the x-, y- and z-axes of the orthogonal coordinate system having its origin on the center of gravity of the helicopter, thus permitting the first, second and third single-axis gyroscopes to provide first, second and third signals representing the instantaneous pitch, roll and yaw angular velocities at their output terminals respectively; and
control means responsive to the pitch-angular, roll-angular and yaw-angular primary control signals from an on-ground transmitter, and to the first, second and third signals from the first, second and third single-axis gyroscopes for providing pitch-angular, roll-angular and yaw-angular secondary control signals to the elevator, aileron and rudder servomechanisms of the aircraft respectively, the control means being so designed that: a PID control may be effected on each controlled variable until a predetermined threshold value has been reached, and then a PD control may be effected on each controlled variable until the end of the required control, the predetermined threshold value at which the PID control mode is switched to the PD control mode representing a relatively narrow, but uncontrollable variation range in which the attitude of the helicopter depends on uncertainties.

2. An apparatus for controlling the attitude of a radio-controlled helicopter according to claim 1 wherein in the PID control mode the secondary control signal may be provided for controlling each controlled variable by: determining the present angle by adding the present angular velocity to the preceding angle, which is determined by integration of instantaneous angular velocities measured on the controlled variable; determining the present angular acceleration by subtracting the preceding angular velocity from the present angular velocity; and totalizing the present angular velocity multiplied by K1, the present angle multiplied by K2 and the present angular acceleration multiplied by K3, where K1, K2 and K3 are given constants, whereas in the PD control mode the secondary control signal may be provided for controlling each controlled variable by: determining the present angular acceleration by subtracting the preceding angular velocity from the present angular velocity; and totalizing the present angular velocity multiplied by K1 and the present angular acceleration multiplied by K3.

3. An apparatus for controlling the attitude of a radio-control led helicopter according to claim 1 or 2 wherein the predetermined threshold value is approximately 5 to 10 degrees estimated in terms of pitch-, roll- or yaw-angular displacement about the pitch-reference, roll-reference or yaw-reference axis.

4. An apparatus for controlling the attitude of a radio-controlled helicopter according to claim 1, 2 or 3 wherein the helicopter is for hobby or industrial use.
